# EUROPEAN PATENT SPECIFICATION

(11) **EP 2 719 285 B1**
(45) Date of publication and mention of the grant of the patent: **10.01.2018**
(21) Application number: 13199772.8
(22) Date of filing: 13.06.2008
(51) Int. Cl.: A23C 19/082, A23C 19/097

(54) **Method of making cheese**
Verfahren zur Herstellung von Käse
Procédé de fabrication de fromage

(30) Priority: 15.06.2007 EP 07011770
(43) Date of publication of application: 16.04.2014
(62) Divisional of application: 08773433.1
(73) Proprietor: SPX Flow Technology Danmark A/S, 8600 Silkeborg (DK)
(72) Inventor: THORSEN, Claus, 8600 Silkeborg (DK); HARBO, Erik, Dath, 8210 Aarhus (DK)
(74) Representative: Nordic Patent Service A/S

(56) References cited:
- EP-A- 0 997 073
- EP-A- 1 576 886
- WO-A-91/02461
- WO-A-2006/030128
- US-A- 4 680 194
- DATABASE WPI Week 200582 Thomson Scientific, London, GB; AN 2005-798871 XP002467736, & CN 1 644 071 A (LUO C) 27 July 2005 (2005-07-27)

## Description

The present invention relates to a method of making cheese in accordance with the preamble according to claim 1.

The paste-like emulsified homogenous pre-cheese mixture is to be used for making a traditional ripened cheese.

WO 2006/030128 A1 discloses a method of making cheese in accordance with the preamble according to claim 1.

US 4680194 discloses a process of preparing an emulsified food product that comprises preparing an aqueous phase of proteinaceous milk solids, an aqueous carrier and an amount of peptizing agent which is effective to peptize the precipitated protein in the milk solids on heating and agitating. An edible fat is mixed with the sol so produced to form an oil-in-water emulsion which is then cooled to below 5°C to convert the emulsion to one of the water-in-oil type by phase inversion. The product may be spreadable from the refrigerator on, if a large amount of protein has been included, may be in the form of a firm but sliceable product.

The method of making cheese as known form WO 2006/030128 A1 is directed to using dairy powder instead of milk for making a traditional ripened cheese. The use of dairy powder instead of milk has the advantage that the method is independent of local raw milk availability. Furthermore, there is no whey as a by-product of the cheese making.

This known method provides a continuous cheese process instead of the traditional batch cheese process. This is a time saving way of making cheese because of the continuous cheese making method.

Compared to the traditional cheese making methods, the method known from WO 2006/030128 A1 provides a space saving process line because the known method is running on the basis of cheese concentrate and not on raw milk as traditional methods of making cheese.

Compared to the traditional cheese making methods, the energy needed for performing the known method based on dairy powders instead of raw milk is reduced. For instance the pasteurising line capacity will only be 1/10 of a traditional cheese milk pasteurising line. It is clear, that the same proportional reduction of energy will be obtained.

Compared to traditional cheese making methods, another advantage is that the method is more hygienic and safe because according to the known method the process line can be provided as a closed process line whereas traditional cheese making lines are normally more open.

Compared to traditional cheese making methods, the method of this prior art is more simple, because the following equipment may be omitted in a cheese making apparatus: the cheese vat, the cheese whey first drain, the cheese whey second drain, a cutting device for cutting the cheese curd, a device for treating raw milk, and/or cheese pressing equipment.

However, the known method has the disadvantage that the obtained pre-cheese mixture is dull grey and unstable to subsequent heat treatment used for pasteurisation or sterilisation.

Accordingly, it is an object of the invention to provide a method of making cheese based on dairy powders, which provides a more attractive white pre-cheese mixture, which is stable to pasteurisation or sterilisation without separation.

This object is achieved with the features of the independent claim. Preferred embodiments of the invention are disclosed in the dependent claims.

According to one aspect of the invention there is provided a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer, wherein
   - step (b) and/or step (c) are performed until a paste-like emulsified homogenous pre-cheese mixture is obtained, and
   - wherein step (b) and/or step (c) are performed until a phase conversion of the content of the solid-liquid mixture takes place. According to another aspect of the invention there is provided a method of making cheese, wherein in step (b) and/or step (c) the temperature is raised until a phase conversion of the content of the solid-liquid mixer takes place.

According to another aspect of the invention there is provided a method of making cheese, wherein step (b) and/or step (c) are performed until an increase of the viscosity of the contents of the solid-liquid mixer is detected and/or the colour of the contents of the solid-liquid mixer turns white.

According to another aspect of the invention there is provided a method of making cheese, wherein step (b) and/or step (c) are performed at a temperature between 60°C and 85°C.

According to another aspect of the invention there is provided a method of making cheese, wherein step (b) and/or step (c) are performed at a temperature between 62°C and 80°C, preferably at a temperature between 64°C and 77°C, more preferable at a temperature between 65°C and 75°C, more preferable at a temperature between 67°C and 73°C, and most preferred at a temperature between 68°C and 72°C.

According to another aspect of the invention there is provided a method of making cheese, wherein in step (b) the temperature is increased to the temperature of step (b) after an initial mixing has taken place.

According to another aspect of the invention there is provided a method of making cheese, wherein step (b) and/or step (c) are performed at a shear rate of more than 5,000/sec, preferably at a shear rate of more than 7,500/sec, and more preferably at a shear rate of 10,000/sec.

According to another aspect of the invention there is provided a method of making cheese, wherein step (b) and/or step (c) are at a shear rate of less than 40,000/sec, preferably at a shear rate of less than 20,000/sec, and more preferably at a shear rate of 10,000/sec.

According to another aspect of the invention there is provided a method of making cheese, wherein step (b) and/or step (c) are performed for at least 10 Minutes, preferably for at least 20 Minutes and most preferred for 30 Minutes, and/or wherein step (b) and/or step (c) are performed for less than 60 Minutes, preferably less than 45 Minutes and most preferred for 30 Minutes.

According to another aspect of the invention there is provided a method of making cheese, wherein the paste-like emulsified homogenous pre-cheese mixture is pasteurised.

According to another aspect of the invention there is provided a method of making cheese, wherein in (d) sterilising the paste-like emulsified homogenous pre-cheese mixture.

According to another aspect of the invention there is provided a method of making cheese, wherein the paste-like emulsified homogenous pre-cheese mixture is heated in step (d) at a temperature of more than 120°C, preferably more than 130°C, and more preferably at a temperature of 140°C, and/or wherein the paste-like emulsified homogenous pre-cheese mixture is sterilised in step (d) for more than 1 second, preferably for more than 2 seconds, and more preferably for 3 seconds, and/or wherein the paste-like emulsified homogenous pre-cheese mixture is sterilised in step (d) for than less 5 seconds, preferably for less than 4 seconds, and more preferably for 3 seconds.

The method in accordance with the invention has the advantage, that a very stable pre-cheese mixture is obtained. The best results are obtained by applying a temperature of at least 60°C and high shear rates of at least 5,000/sec. Surprisingly it has been discovered that no phase separation takes place even in case high temperature treatments are made thereafter, like sterilisation etc.

It has surprisingly been noted that a phase conversion takes place at a temperature of about 60°C, especially when a high shear rate, for instance of about 10,000/sec is applied. After the phase conversion has taken place the temperature can stay on its temperature or raised to a higher temperature without risking a phase separation.

If the phase conversion takes place, the viscosity of the pre-cheese mixture increases dramatically. The increased viscosity can be easily detected. For instance a higher energy demand of the mixer is due to the increased viscosity. Therefore, the increased viscosity of the contents of the mixer and the higher energy demand is an indication that a phase conversion has taken place.

In accordance with the present invention step (b) and/or step (c) can be performed at a temperature between 62°C and 80°C, preferably at a temperature between 64°C and 77°C, more preferable at a temperature between 65°C and 75°C, more preferable at a temperature between 67°C and 73°C, and most preferred at a temperature between 68°C and 72°C.

In accordance with the present invention in step (b) the temperature can be increased to the temperature of step (b) after an initial mixing has taken place.

In accordance with the present invention step (b) and/or step (c) can be performed for at least 10 Minutes, preferably for at least 20 Minutes and most preferred for 30 Minutes.

In accordance with the present invention step (b) and/or step (c) can be performed until the cheese base turns white and there is a marked increase in viscosity, as evidenced by an increase in power consumption of the mixer.

In accordance with the present invention step (b) and/or step (c) can be performed for less than 60 Minutes, preferably less than 45 Minutes and most preferred for 30 Minutes.

In accordance with the present invention in step (c) the vacuum can be applied to the head space of the mixer with the powder being introduced below the level of the liquid in the mixer. This prevents powder being sucked out by the vacuum.

In accordance with the present disclosure in step (c) a low-pressure or vacuum of less than about 2 mbar, preferably less than about 1 mbar and more preferably of about 0.5 mbar can be applied.

In accordance with the present disclosure step (b) and step (c) are performed at least partially simultaneously, simultaneously or one after the other.

In accordance with the present invention the paste-like emulsified homogenous pre-cheese mixture can be pasteurised. The pasteurisation can be performed in step (b) and/or step (c) and thereafter. If the pasteurisation is performed in step (b), the temperature is preferably raised to a first temperature, for instance 60°C, until the phase conversion takes place, and thereafter raised to a second temperature, for instance 65°C, where the pasteurisation takes place.

In the cheese production the milk is pasteurised, i.e. heated instantaneously to 68-73°C to kill bacteria that can destroy the cheese quality otherwise without affecting the ability of the casein to coagulate. The skilled person knows that temperatures in excess of 73°C cannot be applied, as it causes so considerable changes in the conditions of the milk protein, that the production of good-quality cheese is impossible.

During pasteurisation, vegetative bacteria are killed. However, the spores of the bacteria are heat resistant and will not be killed by the temperatures pasteurisation is performed at. Butyric acid bacteria and other types of such bacteria can be detrimental for the fermentation of cheese. Accordingly it will be advantageous to eliminate the spores also from the pre-cheese mixture. For milk this is normally made by means of a mechanical separation or through the use of a membrane process described as microfiltration. Due to the higher density of spores it is possible to eliminate the spores from the milk using a centrifuge. However, this separation method cannot be performed with the pasty-like pre-cheese mixture because of its high viscosity. Similarly, the use of microfiltration is not possible.

Herein there is disclosed a method for making cheese wherein a better microbiological cheese quality is obtained.

Herein there is further disclosed a method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer, wherein step (b) and/or step (c) are performed until a paste-like emulsified homogenous pre-cheese mixture is obtained, and
(d) sterilising the paste-like emulsified homogenous pre-cheese mixture.

Preferably this disclosed method may also comprise one or more of the features as mentioned above with regard to the other aspect of the invention.

In accordance with the present disclosure the paste-like emulsified homogenous pre-cheese mixture can be heated in step (d) at a temperature of more than about 120°C, preferably more than about 130°C, and more preferably at a temperature of about 140°C and/or the paste-like emulsified homogenous pre-cheese mixture can be sterilised in step (d) for more than about 1 second, preferably for more than about 2 seconds, and more preferably for about 3 seconds and/or the paste-like emulsified homogenous pre-cheese mixture can be sterilised in step (d) for than less 5 seconds, preferably for less than about 4 seconds, and more preferably for about 3 seconds.

In accordance with the present disclosure, in step (d) steam infusion heating can be used for heating of the paste-like emulsified homogenous pre-cheese mixture.

In accordance with the present disclosure, in step (d) the paste-like emulsified homogenous pre-cheese mixture can be preheated to a first heat treatment temperature and then heated to the final heat treatment temperature.

In accordance with the present disclosure, the final heat treatment temperature can be a temperature of more than about 120°C, preferably more than about 130°C, and more preferably a temperature of about 140°C.

In accordance with the present disclosure, the first heat treatment temperature can be a temperature of more than 75°C, preferable more than 80°C and more preferably of about 85°C.

In accordance with the present disclosure, the first heat treatment temperature can be a temperature of less than 95°C, preferable less than 90°C and more preferably of about 85°C.

In accordance with the present disclosure, in step (d) the paste-like emulsified homogenous pre-cheese mixture can be preheated by means of a surface heat exchanger, preferably by means of a scraped surface heat exchanger.

In accordance with the present disclosure, in step (d) the paste-like emulsified homogenous pre-cheese mixture can be heated to the final heat treatment temperature by means of steam infusion heating. There is the advantage, that despite the high temperatures a gentle heat treatment can be performed because the intended temperature can be achieved in a very short time.

It has been surprisingly discovered that due to this gentle heat treatment by means of steam infusion a sterilisation of the paste-like emulsified homogenous pre-cheese mixture can be obtained and that the sterilised pre-cheese mixture can be used to make a traditionally ripened cheese with a better microbiological cheese quality.

Herein there is further disclosed a method comprising the following step:
(e) cooling the heat treated paste-like emulsified homogenous pre-cheese mixture after step (d).

In accordance with the present disclosure in step (e) the paste-like emulsified homogenous pre-cheese mixture can be cooled by means of a heat exchanger, preferably by means of a scraped surface heat exchanger or flash cooled by means of the vacuum vessel of an infusion plant.

In accordance with the present disclosure in step (e) the temperature of the paste-like emulsified homogenous pre-cheese mixture can be cooled down to a temperature of less than about 45°C, preferably less than about 40°C.

In accordance with the present disclosure, in step (e) the paste-like emulsified homogenous pre-cheese mixture can be cooled to a first cooling temperature and then cooled to a final cooling temperature.

In accordance with the present disclosure, the final cooling temperature can be a temperature of less than about 45°C, preferably less than about 40°C.

In accordance with the present disclosure, the first cooling temperature can be a temperature of more than 75°C, preferable more than 80°C and more preferably of about 85°C.

In accordance with the present disclosure, the first cooling temperature is a temperature of less than 95°C, preferable less than 90°C and more preferably of about 85°C.

In accordance with the present disclosure, in step (e) the heat treated paste-like emulsified homogenous pre-cheese mixture can be cooled down to the first cooling temperature by means of flash cooling, preferably by means of a flash vessel operated under vacuum.

In accordance with the present disclosure, in step (e) the heat treated paste-like emulsified homogenous pre-cheese mixture can be cooled down to the final cooling temperature by means of a heat exchanger, preferably by means of a scraped surface heat exchanger.

The method in accordance with the present disclosure can also comprise the following step:
(f) adding production aids to the cooled paste-like emulsified homogenous pre-cheese mixture after step (e) and/or step (d).

In accordance with the present disclosure, the production aids can comprise acidifying agents, fermenting agents and/or coagulating enzymes.

In accordance with the present disclosure, the production aids can comprise acids, preferably beta glucono-lactone.

In accordance with the present disclosure, the production aids can comprise mesophilic fermenting agents and/or thermophilic fermenting agents, preferably of the genus of Lactobacillus and/or Streptococcus.

In accordance with the present disclosure, the production aids comprise a coagulating agent such as bovine or microbial rennet.

In accordance with the present disclosure, adding production aids can be stopped before a break, preferably stopped at least for a period of time it takes the paste-like emulsified homogenous pre-cheese mixture to pass from the portion of the mixer where the production aids are added to the exit of the mixer. This provides the advantage, that no coagulation of the pre-cheese mixture will take place, because all pre-cheese mixture comprising production aids have been removed from the apparatus.

In accordance with the present disclosure, the paste-like emulsified homogenous pre-cheese mixture exiting the mixer can be recirculated into the solid-liquid mixer of step (a) if the method is to be continued after a break, preferably recirculated at least for a period of time it takes the paste-like emulsified homogenous pre-cheese mixture to pass from the portion of the mixer where the production aids are added to the exit of the mixer. This provides the advantage that the pre-cheese mixture exiting the apparatus but not having production aids added can be reused and does not have to be discharged.

The method in accordance with the present disclosure can also comprise the following step:
(g) producing cheese using the paste-like emulsified homogenous pre-cheese mixture of step (c), step (d), step (e) and/or step (f).

In accordance with the present disclosure, step (g) can include moulding, incubation, pressing, salting, ripening, removing the cheese from the mould or other steps known from the traditional way of making cheese.

In accordance with the present disclosure, the paste-like emulsified homogenous pre-cheese mixture can have a dry matter content of 40 to 65% by weight and preferably 51-55% by weight. In accordance with the present disclosure, the paste-like emulsified homogenous pre-cheese mixture can comprise butyric acid fat, cream and/or vegetable fat.

In accordance with the present disclosure, the powders containing whey protein and lactose-reduced dairy protein concentrates can have a lactose content of less than about 10% by weight.
In accordance with the present disclosure, the powders containing whey protein and lactose-reduced dairy protein concentrates can have a native, non-denatured protein content of more than about 65% by weight.

In accordance with the present disclosure the powders containing whey protein and lactose-reduced dairy protein concentrates can when mixed have a resultant casein content of more than about 80% of total solids by proteins, preferably between 85 and 92% of total solids by proteins.

In accordance with the present disclosure, the powders containing whey protein and lactose-reduced dairy protein concentrates and/or the paste-like emulsified homogenous pre-cheese mixture can have a casein to whey protein ratio of at least 85:15, preferably of at least 90:10 and most preferred of about 98:2 and/or a casein to whey protein ratio corresponding to that of traditional cheese.

In accordance with the present disclosure, the total solid content of the paste-like emulsified homogenous pre-cheese mixture can be at least 40%, preferably at least 50% and most preferred about 55%.

In accordance with the present disclosure, the total solid content of the paste-like emulsified homogenous pre-cheese mixture after flash cooling using an infusion plant can be about 65%.

Herein there is disclosed a cheese making apparatus comprising a solid-liquid mixer and sterilisation means.

In accordance with the present disclosure the sterilisation means can comprise a steam infusion heating device. According Herein there is disclosed a cheese making apparatus comprising a solid-liquid mixer and heating means, characterised in that the heating means include a steam infusion heating device.

Other characteristics and advantages will become clear from the following detailed description of exemplary embodiments in accordance with the invention.

The solid-liquid mixer used can be any mixer capable of mixing solids with liquids at the desired temperature and shear rate. For instance the FLEX-MIX PROCESSOR of Invensys APV may be used, preferably with the high shear rate impeller. The mixer should have sufficient power in order to provide a shear rate of at least 5,000/sec, preferable of at least 10,000/sec. There may be vacuum means for applying low pressure or vacuum at the head space of the solid-liquid mixer.

After the solid-liquid mixer there is preferably an in-line mixer. For instance the DAR mixer of Invensys APV may be used. A dosing pump is provided for dosing production aids (for instance rennet and starter) into the pre-cheese paste entering into the in-line mixer. The in-line mixer is provided for thoroughly mixing the production aids into the pre-cheese paste.

If pasteurisation of the pre-cheese mixture is desired, for instance a scraped surface heat exchanger may be used, being preferably connected between the solid-liquid mixer and the in-line mixer.

If sterilisation of the pre-cheese mixture is desired, for instance an infusion heating device, preferably in combination with a heat exchanger, for instance a scraped heat exchanger may be used, being preferably connected between the solid-liquid mixer and the in-line mixer.

The pre-cheese mixture exiting the in-line mixer preferably comprises dry matter content of 40 to 65%, and preferably of 55% by weight.

The casein to whey protein ratio of the pre-cheese mixture corresponds to the casein to whey protein ratio of the final cheese. Clearly, it is intended that the casein to whey protein ratio shall be the similar or slightly lower as for traditional cheese.

Form the exit of the in-line mixer the pre-cheese mixture is filled into moulds and treated as traditional cheese with the exception that no mechanical pressing is required. The skilled person is aware of these techniques.

As production aids coagulation enzymes (for instance rennet) and/or a chemical acidulant such as glucono-lactone may be added.

The sterilisation and/or heat treatment step may be carried out at a minimum temperature of 130°C, for instance for at least 3 seconds, or may utilise an equivalent treatment.

The pre-cheese mixture exiting the in-line mixer normally having a high viscosity, such that the pre-cheese mixture can directly been moulded into moulds or receptacles normally used by the skilled person for further treatment such as ripening etc.

In the moulds the pre-cheese mixture will coagulate because of the added production aids such as rennet.

To complete the coagulation and acidification, preferably an incubation step is following the step of moulding the pre-cheese mixture. During this step the cheeses are in their moulds and incubation takes place at a temperature of 28 to 31°C and a hygrometry rate of 99 to 100% for a period of time which can vary from a few hours to 20 hours, until a pH is obtained in the order of 5.3 to 4.8.

In accordance with the present disclosure it will be possible to mould and directly portion cheeses in any desired shape and/or size. This technology enables a wide variety of unusual cheese shapes to be obtained owing to the removal of mechanical pressing.

After the incubation step has been completed, the cheeses are removed from the moulds and further steps may be performed the skilled person is aware of, for instance salting (in brine or using dry salt) and/or any treatments for obtaining rinds and/or special flavours etc.

If desired, other standard cheese-making techniques may be performed the skilled person is aware of.

The cheese obtained in accordance with the present disclosure are almost identical to traditionally produced cheeses. However, the cheeses are obtained by using powder instead of raw milk. Accordingly, the production of cheese is very easy. Especially there is no need of remove any byproducts as it is necessary in the traditional method for producing cheese.

In principle any variety of semi-hard or hard cheese analogue can be produced with the method and/or apparatus of the present invention.

It is clear that the description of the specific embodiments of the invention is not to be intended to limit the scope of protection which is defined by the claims.

## Claims

1. Method of making cheese comprising the following steps:
(a) supplying water, fat and powders containing whey protein and lactose-reduced dairy protein concentrates into a solid-liquid mixer,
(b) emulsifying and homogenising the content of the solid-liquid mixer,
(c) applying low-pressure or vacuum to the inner space of the mixer,
wherein step (b) and/or step (c) are performed until a paste-like emulsified homogenous pre-cheese mixture is obtained,
**characterised in that** step (b) and/or step (c) are performed until a phase conversion of the content of the solid-liquid mixer takes place.

2. Method according to claim 1, **characterised in that** in step (b) and/or step (c) the temperature is raised until a phase conversion of the content of the solid-liquid mixer takes place.

3. Method according to any of the preceding claims, **characterised in that** step (b) and/or step (c) are performed until an increase of the viscosity of the contents of the solid-liquid mixer is detected and/or the colour of the contents of the solid-liquid mixer turns white.

4. Method according to any of the preceding claims **characterised in that** step (b) and/or step (c) are performed at a temperature between 60°C and 85°C.

5. Method according to claim 4, **characterised in that** step (b) and/or step (c) are performed at a temperature between 62°C and 80°C, preferably at a temperature between 64°C and 77°C, more preferable at a temperature between 65°C and 75°C, more preferable at a temperature between 67°C and 73°C, and most preferred at a temperature between 68°C and 72°C.

6. Method according to any of the preceding claims **characterised in that** in step (b) the temperature is increased to the temperature of step (b) after an initial mixing has taken place.

7. Method according to any of the preceding claims **characterised in that** step (b) and/or step (c) are performed at a shear rate of more than 5,000/sec, preferably at a shear rate of more than 7,500/sec, and more preferably at a shear rate of 10,000/sec.

8. Method according to any of the preceding claims **characterised in that** step (b) and/or step (c) are at a shear rate of less than 40,000/sec, preferably at a shear rate of less than 20,000/sec, and more preferably at a shear rate of 10,000/sec.

9. Method according to any of the preceding claims **characterised in that** step (b) and/or step (c) are performed for at least 10 Minutes, preferably for at least 20 Minutes and most preferred for 30 Minutes, and/or
**characterised in that** step (b) and/or step (c) are performed for less than 60 Minutes, preferably less than 45 Minutes and most preferred for 30 Minutes.

10. Method according to any of the preceding claims **characterised in that** the paste-like emulsified homogenous pre-cheese mixture is pasteurised.

11. Method according to any of the preceding claims **characterised by**:
(d) sterilising the paste-like emulsified homogenous pre-cheese mixture.

12. Method according to claim 11, **characterised in that** the paste-like emulsified homogenous pre-cheese mixture is heated in step (d) at a temperature of more than 120°C, preferably more than 130°C, and more preferably at a temperature of 140°C, and/or
**characterised in that** the paste-like emulsified homogenous pre-cheese mixture is sterilised in step (d) for more than 1 second, preferably for more than 2 seconds, and more preferably for 3 seconds, and/or **characterised in that** the paste-like emulsified homogenous pre-cheese mixture is sterilised in step (d) for than less 5 seconds, preferably for less than 4 seconds, and more preferably for 3 seconds.

## Patentansprüche

1. Verfahren zur Herstellung von Käse, umfassend die folgenden Schritte:
(a) Einbringen von Wasser, Fett und Pulvern, welche Molkeprotein und laktosereduzierte Milchproteinkonzentrate enthalten, in einen Flüssigkeits-Feststoff-Mischer,
(b) Emulgieren und Homogenisieren des Inhalts des Flüssigkeits-Feststoff-Mischers,
(c) Anlegen von Unterdruck oder Vakuum an den Innenraum des Mischers,
wobei Schritt (b) und / oder Schritt (c) solange durchgeführt werden, bis eine pastenartige, emulgierte, homogene Vorkäse-Mischung erhalten wird,
**dadurch gekennzeichnet, dass** Schritt (b) und / oder Schritt (c) solange durchgeführt werden, bis eine Phasenumwandlung von dem Inhalt des Flüssigkeits-Feststoff-Mischers stattfindet.

2. Schritt (b) und / oder Schritt (c) solange durchgeführt werden, bis eine Phasenumwandlung von dem Inhalt des Flüssigkeits-Feststoff-Mischers stattfindet.

3. Verfahren nach einem der vorhergehenden Ansprüche, **dadurch gekennzeichnet, dass** Schritt (b) und / oder Schritt (c) solange durchgeführt werden, bis eine Erhöhung der Viskosität von dem Inhalt des Flüssigkeits-Feststoff-Mischers festgestellt wird und / oder die Farbe von dem Inhalt des Flüssigkeits-Feststoff-Mischers weiß wird.

4. Verfahren nach einem der vorhergehenden Ansprüche, **dadurch gekennzeichnet, dass** Schritt (b) und / oder Schritt (c) bei einer Temperatur zwischen 60 °C und 85 °C durchgeführt werden.

5. Verfahren nach Anspruch 4, **dadurch gekennzeichnet, dass** Schritt (b) und / oder Schritt (c) bei einer Temperatur zwischen 62 °C und 80 °C, vorzugsweise bei einer Temperatur zwischen 64 °C und 77 °C, noch mehr bevorzugt bei einer Temperatur zwischen 65 °C und 75 °C, stärker bevorzugt bei einer Temperatur zwischen 67 °C und 73 °C und am meisten bevorzugt bei einer Temperatur zwischen 68 °C und 72 °C durchgeführt werden.

6. Verfahren nach einem der vorhergehenden Ansprüche, **dadurch gekennzeichnet, dass** in Schritt (b) die Temperatur auf die Temperatur von Schritt (b) erhöht wird, nachdem eine anfängliche Durchmischung stattgefunden hat.

7. Verfahren nach einem der vorhergehenden Ansprüche, **dadurch gekennzeichnet, dass** Schritt (b) und / oder Schritt (c) bei einer Schergeschwindigkeit von mehr als 5.000 / s, vorzugsweise bei einer Schergeschwindigkeit von mehr als 7.500 / s und noch mehr bevorzugt bei einer Schergeschwindigkeit von 10.000 / s durchgeführt werden.

8. Verfahren nach einem der vorhergehenden Ansprüche, **dadurch gekennzeichnet, dass** Schritt (b) und / oder Schritt (c) bei einer Schergeschwindigkeit von weniger als 40.000 / s, vorzugsweise bei einer Schergeschwindigkeit von weniger als 20.000 / s und noch mehr bevorzugt bei einer Schergeschwindigkeit von 10.000 / s durchgeführt werden.

9. Verfahren nach einem der vorhergehenden Ansprüche, **dadurch gekennzeichnet, dass** Schritt (b) und / oder Schritt (c) für mindestens 10 Minuten, vorzugsweise für mindestens 20 Minuten und am meisten bevorzugt für 30 Minuten durchgeführt werden, und / oder
**dadurch gekennzeichnet, dass** Schritt (b) und / oder Schritt (c) für weniger als 60 Minuten, vorzugsweise für weniger als 45 Minuten und am meisten bevorzugt für 30 Minuten durchgeführt werden.

10. Verfahren nach einem der vorhergehenden Ansprüche, **dadurch gekennzeichnet, dass** die pastenartige, emulgierte homogene Vorkäse-Mischung pasteurisiert wird.

11. Verfahren nach einem der vorhergehenden Ansprüche, **gekennzeichnet durch**:
(d) Sterilisieren der pastenartigen, emulgierten homogenen Vorkäse-Mischung.

12. Verfahren nach Anspruch 11, **dadurch gekennzeichnet, dass** die pastenartige, emulgierte homogene Vorkäse-Mischung in Schritt (d) bei einer Temperatur von mehr als etwa 120 °C, vorzugsweise von mehr als 130 °C, und noch mehr bevorzugt bei einer Temperatur von 140 °C erhitzt wird, und / oder
**dadurch gekennzeichnet, dass** die pastenartige, emulgierte homogene Vorkäse-Mischung in Schritt (d) für länger als 1 Sekunde, vorzugsweise für länger als 2 Sekunden und besonders bevorzugt für länger als 3 Sekunden sterilisiert wird, und / oder
**dadurch gekennzeichnet, dass** die pastenartige, emulgierte homogene Vorkäse-Mischung in Schritt (d) für weniger als 5 Sekunden, vorzugsweise für weniger als 4 Sekunden und noch mehr bevorzugt für 3 Sekunden sterilisiert wird.

## Revendications

1. Procédé de fabrication de fromage comprenant les étapes suivantes consistant à :
(a) fournir de l'eau, de la graisse et des poudres contenant de la protéine de lactosérum et des concentrés de protéines laitières à faible teneur en lactose dans un mélangeur solide-liquide,
(b) émulsifier est homogénéiser le contenu du mélangeur solide-liquide,
(c) appliquer une faible pression ou un vide à l'espace interne du mélangeur,
dans lequel l'étape (b) et/ou l'étape (c) sont effectuées jusqu'à ce qu'un mélange de pré-fromage homogène émulsifié et semblable à une patte soit obtenu,
**caractérisé en ce que** l'étape (b) et/ou l'étape (c) sont effectuées jusqu'à ce qu'une conversion de phase du contenu du mélangeur solide-liquide se déroule.

2. Procédé selon la revendication 1, **caractérisé en ce que** dans l'étape (b) et/ou dans l'étape (c) on accroît la température jusqu'à ce qu'une conversion de phase du contenu du mélangeur solide-liquide se déroule.

3. Procédé selon l'une quelconque des revendications précédentes **caractérisé en ce que** l'étape (b) et/ou l'étape (c) sont effectuées jusqu'à ce qu'une augmentation de la viscosité des contenus du mélangeur solide-liquide soit détectée et/ou que la couleur des contenus du mélangeur solide-liquide devienne blanche.

4. Procédé selon l'une quelconque des revendications précédentes **caractérisé en ce que** l'étape (b) et/ou l'étape (c) sont effectuées à une température comprise entre 60 ° C et 85 °C.

5. Procédé selon la revendication 4, **caractérisé en ce que** l'étape (b) et/ou l'étape (c) sont effectuées à une température comprise entre 62 °C et 80 °C, de préférence à une température comprise entre 64 °C et 77 °C, plus préférablement à une température comprise entre 65 °C et 75 °C, encore plus préférablement à une température comprise entre 67 °C et 73 °C, et le plus préférablement à une température comprise entre 68 °C et 72 °C.

6. Procédé selon l'une quelconque des revendications précédentes **caractérisé en ce que** l'étape (b) on augmente la température à la température de l'étape (b) après qu'un mélange initial se soit déroulé.

7. Procédé selon l'une quelconque des revendications précédentes **caractérisé en ce que** l'étape (b) et/ou l'étape (c) sont effectuées à un taux de cisaillement supérieur à 5000/sec, de préférence à un taux de cisaillement supérieur à 7500/sec, et plus préférablement à un taux de cisaillement de 10 000/sec.

8. Procédé selon l'une quelconque des revendications précédentes **caractérisé en ce que** l'étape (b) et/ou l'étape (c) sont effectuées à un taux de cisaillement inférieur à 40 000/sec, de préférence à un taux de cisaillement inférieur à 20 000/sec, et plus préférablement à un taux de cisaillement de 10 000/sec.

9. Procédé selon l'une quelconque des revendications précédentes **caractérisé en ce que** l'étape (b) et/ou l'étape (c) sont effectuées pendant au moins 10 minutes, de préférence pendant au moins 20 minutes et plus préférablement pendant 30 minutes, et/ou
**caractérisé en ce que** l'étape (b) et/ou l'étape (c) sont effectuées pendant moins de 60 minutes, de préférence moins de 45 minutes et plus préférablement pendant 30 minutes.

10. Procédé selon l'une quelconque des revendications précédentes **caractérisé en ce que** le mélange de pré-fromage homogène émulsifié et semblable à une patte soit pasteurisé.

11. Procédé selon l'une quelconque des revendications précédentes **caractérisé par** :
(d) la stérilisation du mélange pré-fromage homogène émulsifié et ressemblant à une patte.

12. Procédé selon la revendication 11, **caractérisé en ce que** le mélange pré-fromage homogène émulsifié et ressemblant à une patte soit chauffé dans l'étape (d) à une température supérieure à 120 °C, de préférence supérieure à 130 °C, et plus préférablement à une température de 140 °C, et/ou
**caractérisé en ce que** le mélange pré-fromage homogène émulsifié et ressemblant à une patte soit stérilisé dans l'étape (d) pendant plus de 1 seconde, de préférence pendant plus de 2 secondes, et plus préférablement pendant 3 secondes, et/ou
**caractérisé en ce que** le mélange pré-fromage homogène émulsifié et ressemblant à une patte soit stérilisé dans l'étape (d) pendant moins de 5 secondes, de préférence pendant moins de 4 secondes, et plus préférablement pendant 3 secondes.
